# EUROPEAN PATENT APPLICATION

(11) **EP 4 546 149 A1**
(43) Date of publication of application: **30.04.2025**
(21) Application number: 24206932.6
(22) Date of filing: 16.10.2024
(51) Int. Cl.: G06F 15/02, G06F 3/04847

(54) **CALCULATION DEVICE, CALCULATION SYSTEM, SOLUTION DISPLAYING METHOD AND PROGRAM**

(30) Priority: 23.10.2023 JP 2023181515
(71) Applicant: CASIO COMPUTER CO., LTD., Tokyo 151-8543 (JP)
(72) Inventor: Ono, Manato, Hamura-shi, Tokyo, 205-8555 (JP)
(74) Representative: Grünecker Patent- und Rechtsanwälte PartG mbB

(57) **Abstract**

A calculation device (3) including a control section (500) which executes processing of controlling a display (320) to display a solution of a specified mathematical equation in a first display style among a plurality of predetermined display styles, controlling the display (320) to display, when the solution of the mathematical equation is displayable in a different display style that differs from the first display style among the plurality of display styles, a conversion icon (624) indicating that the solution of the mathematical equation is convertible to be displayed in the different display style, and controlling the display (320) to display information regarding the different display style or to display the solution of the mathematical equation in the different display style when a predetermined operation is performed on the conversion icon (624).

## Description

### BACKGROUND

### 1. Technical Field

The present disclosure relates to a calculation device, a calculation system, a solution displaying method and a program.

### 2. Description of the Related Art

Some of the calculation devices that display the solution of an inputted mathematical equation have a conversion key that functions as solution display switching means which switches the display style of the solution in accordance with the type of the mathematical equation, as disclosed in Japanese Patent Application Laid-Open (Kokai) Publication No. 2000-057100.

In the case of the calculation device disclosed in Japanese Patent Application Laid-Open (Kokai) Publication No. 2000-057100, the display style of a solution can be switched by the conversion key being operated. However, it is difficult for the user to grasp whether or not the current display style can be switched or to which display style the current display style is converted when the conversion key is operated.

An object of the present disclosure is to enable the user to easily grasp to which display style the current display style of the solution of a specified mathematical equation can be converted.

### SUMMARY

In accordance with one aspect of the present disclosure, there is provided A calculation device comprising a control section which executes processing of:
controlling a display to display a solution of a specified mathematical equation in a first display style among a plurality of predetermined display styles;
controlling the display to display, when the solution of the mathematical equation is displayable in a different display style that differs from the first display style among the plurality of display styles, a conversion icon indicating that the solution of the mathematical equation is convertible to be displayed in the different display style; and
controlling the display to display information regarding the different display style or to display the solution of the mathematical equation in the different display style when a predetermined operation is performed on the conversion icon.

According to the above-described embodiment, the user can easily grasp to which display style the current display style of the solution of a specified mathematical equation can be converted.

The above and further objects and novel features of the present disclosure will more fully appear from the following detailed description when the same is read in conjunction with the accompanying drawings. It is to be expressly understood, however, that the drawings are for the purpose of illustration only and are not intended as a definition of the limits of the disclosure.

### BRIEF DESCRIPTION OF THE DRAWINGS

FIG. 1 is a diagram describing an example of the configuration of a calculation system according to an embodiment;
FIG. 2 is a diagram describing an example of the hardware structure of a computer;
FIG. 3 is a diagram describing a display example of a web browser;
FIG. 4A to FIG. 4E are diagrams describing an example of screen transition when the display style of a solution is switched;
FIG. 5 is a diagram describing examples of the display style of a solution.
FIG. 6 is a flowchart describing an example of processing that is performed by a calculation device;
FIG. 7 is a flowchart describing an example of display style conversion processing shown in FIG. 6;
FIG. 8 is a diagram describing a first example of conversion information.
FIG. 9 is a diagram describing a second example of conversion information;
FIG. 10 is a diagram describing an example of a method for displaying a solution on the basis of the conversion information shown in FIG. 9;
FIG. 11 is a diagram describing an example of a calculation error;
FIG. 12 is a diagram describing a modification example of a conversion list displaying method; and
FIG. 13A and FIG. 13B are diagrams describing display examples of representations of a solution of a mathematical equation including variables.

### DETAILED DESCRIPTION OF THE PREFERRED EMBODIMENTS

An embodiment of the present disclosure will hereinafter be described with reference to the drawings. Note that the term "display style" in the following descriptions is intended to mean forms as to how the solution of an inputted (or specified) equation is represented, and is used herein synonymously with "display format". Also, "input" in descriptions related to mathematical equations such as "inputted equation" and "inputting of a mathematical equation" may be read as "specify" or a similar expression. Moreover, although the term "calculation device" in the following descriptions is mainly intended to mean a general-purpose computer capable of executing a program that provides a calculation function, it may be an electronic device which is specialized for finding the solutions of inputted equations and is called a calculator (electronic desk-top calculator). Furthermore, the term "calculation learning" in the following descriptions is intended to mean learning that includes the task of finding the solutions of equations, such as the learning of arithmetic, mathematics, physics, chemistry, and engineering.

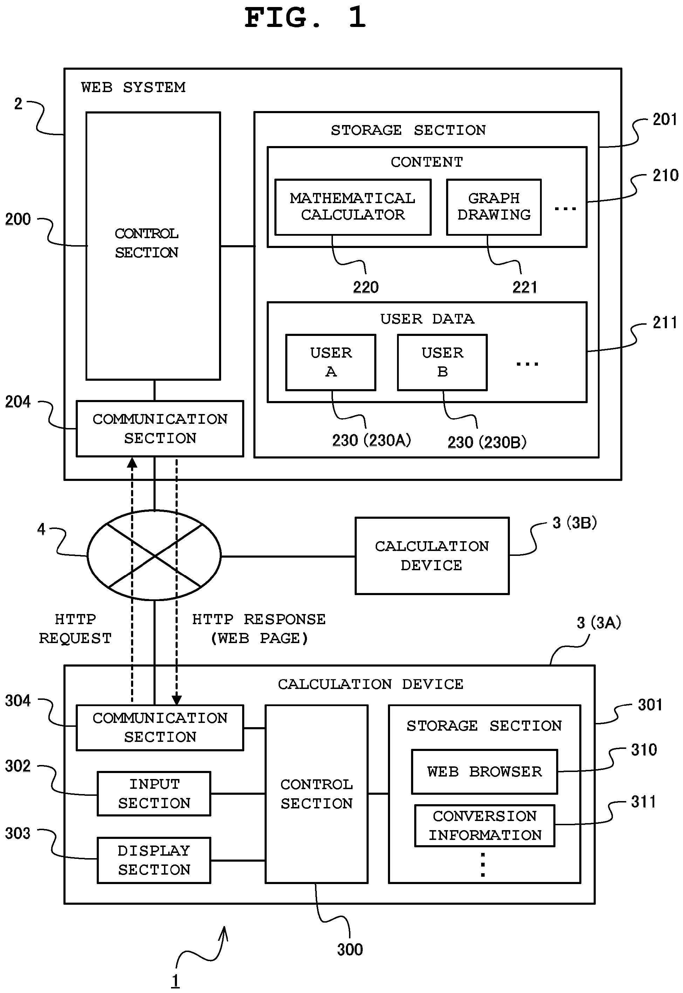

A calculation system 1 shown in FIG. 1 includes a Web system 2 and calculation devices 3. In FIG. 1, as examples of the calculation devices 3, a calculation device 3A which is used by user A for calculation learning and a calculation device 3B which is used by user B for calculation learning are shown. Note that the calculation system 1 may include a calculation device 3 which is used by a user different from user A and user B for calculation learning. These users are children, pupils, students, etc. In the following descriptions, only when the users of the calculation devices are required to be identified, the reference numeral "3" is used with the alphabets "A" and "B".

The Web system 2 is a system which provides with the contents of calculation learning by use of the Internet 4, and includes a control section 200, a storage section 201, and a communication section 204. For example, this Web system 2 may be constituted by a single server, or may be constituted by a plurality of servers. These servers may be Web servers, application servers, or database servers. Note that the term "server" herein may be read as "computer".

The control section 200 controls the operation of the Web system 2. For example, the control section 200 performs processing in response to an HTTP (Hypertext Transfer Protocol) request received from each calculation device 3, generates a Web page in accordance with a result of the processing, and transmits the Web page to the calculation device 3 as an HTTP response. The above-described processing in response to an HTTP request may be, for example, processing of calculating the solution of a mathematical equation, or processing of generating conversion information indicating display styles in which the calculated solution can be displayed. In addition, the processing in response to an HTTP request may be, for example, processing of generating a Web page embedded with a script that enables processing of calculating the solution of a mathematical equation inputted by each calculation device 3 or the like to be performed. This script embedded in a Web page may be, for example, JavaScript (registered trademark).

The storage section 201 stores calculation content 210 that is provided to a user through the Internet 4, user data 211, and other data, programs, and the like not shown in the drawings. The calculation content 210 includes plural types of content that can be used for calculation learning, such as mathematical calculator content 220 and graph drawing content 221, and the user data 211 includes various types of information individually set and registered for each user. Also, the user data 230A of user A includes, for example, the identification information of user A, available content, content settings, a learning history, etc. , and the user data 230B of user B includes, for example, the identification information of user B, available content, content settings, a learning history, etc.

The communication section 204 connects the Web system 2 to the Internet 4, and performs communication with an external device through the Internet 4. This communication section 204 is connected to a communication device such as a router connected to the Internet 4 by a transmission cable such as a LAN (Local Area Network) cable, and communicates in accordance with a well-known communication standard. Also, this communication section 204 may be connected to an access point or a communication device such as a router connected to the Internet 4 by, for example, wireless communication in accordance with a wireless communication standard such as Wi-Fi (Wireless Fidelity: registered trademark).

Each calculation device 3 shown in FIG. 1 includes a control section 300, a storage section 301, an input section 302, a display section 303, and a communication section 304. This calculation device 3 may be, for example, a personal computer such as a tablet computer, a smart phone, etc. Note that this calculation device 3 is not limited to a general-purpose computer, and may be a computer that is exclusively used for learning using the Web system 2, or a computer whose functionality has been limited to learning using the Web system 2.

The control section 300 controls the operation of the calculation device 3. For example, the control section 300 performs processing of displaying a Web page transmitted from the Web system 2 on a web browser, processing of transmitting a mathematical equation inputted into the web browser as an HTTP request, and the like. Also, for example, the control section 300 may perform processing of executing a script embedded in a Web page transmitted from the Web system 2, calculating the solution of an inputted mathematical equation, and displaying the solution, and processing of switching the display style of the solution.

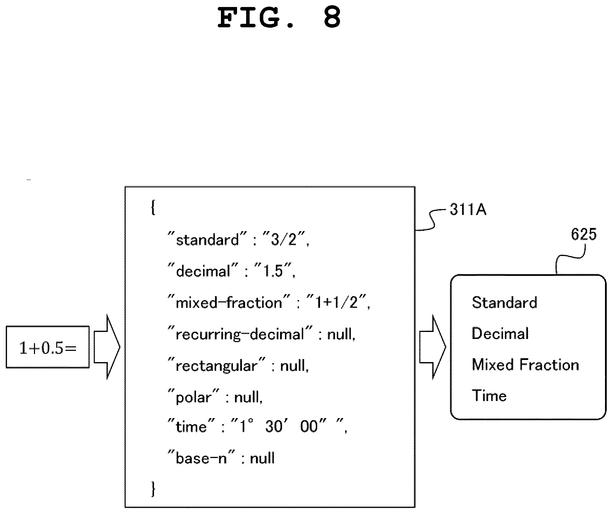

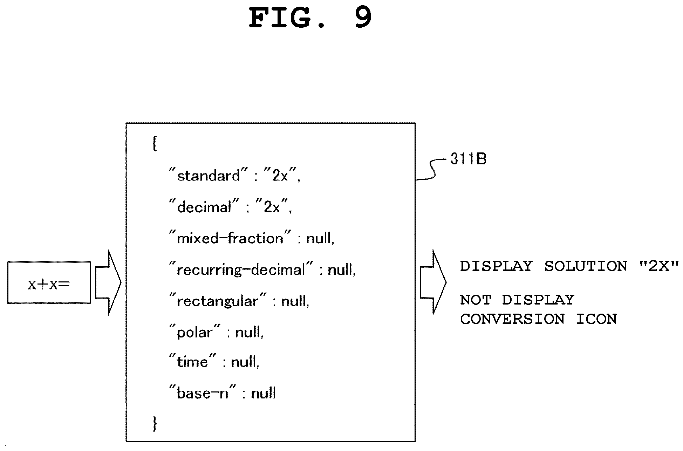

The storage section 301 stores a web browser 310, conversion information 311, and other data, programs, and the like not shown in the drawings. The Web browser 310 is only required that calculation content provided by the Web system 2 can be viewed, a mathematical equation or the like can be inputted, and the solution of the mathematical equation can be displayed, and therefore is not limited to a specific browser. The conversion information 311 may be information indicating display styles in which the solution of a mathematical equation can be displayed. Note that specific examples of the conversion information 311 are described later with reference to FIG. 8 and FIG. 9.

The input section 302 receives the input of information regarding operations performed on (or operations of) the calculation device 3. This input to be received by the input section 302 includes input for starting the web browser 310, the input of a mathematical equation with respect to content (such as mathematical calculator content) displayed on the web browser 310, and the input of an operation for (selecting) switching the display style of a displayed solution. The display section 303 visualizes and displays information regarding the operation of the calculation device 3 and the like. This information to be displayed on the display section 303 includes information on a Web page having calculation content and transmitted from the Web system 2, and information on the solution of an inputted mathematical equation and other display styles in which the solution can be displayed.

The communication section 304 connects the calculation device 3 to the Internet 4, and performs communication with an external device through the Internet 4. This communication section 304 is wirelessly connected to an access point or a router connected to the Internet 4 by, for example, wireless communication in accordance with a wireless communication standard, such as Wi-Fi and Bluetooth (registered trademark). Also, this communication section 304 may be connected to a communication device such as a router connected to the Internet 4 by, for example, a transmission cable such as a LAN cable.

Each function shown by a single block for the calculation system 1 in FIG. 1 may be provided by one or a plurality of hardware. For example, one or both of the function of the control section 200 of the Web system 2 and that of the control section 300 of the calculation device 3 may be provided by a single processor or a plurality of processors. Also, functions shown by a plurality of blocks for the calculation system 1 in FIG. 1 may be provided by a single hardware. Moreover, the Web system 2 and the calculation device 3 may have a functional block which provides a function not shown in FIG. 1. For example, the Web system 2 may include an input section, a display section, etc.

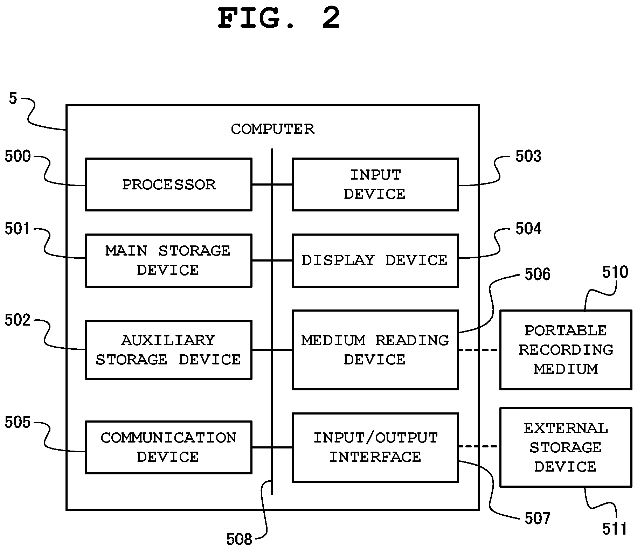

In FIG. 2, an example of the hardware structure of a computer 5 is shown which is available as a server of the Web system 2 or the calculation device 3 in the calculation system 1 of FIG. 1. The computer 5 shown in FIG. 2 includes a processor 500, a main storage device 501, an auxiliary storage device 502, an input device 503, a display device 504, a communication device 505, a medium reading device 506, and an input/output interface 507. These hardware components of the computer 5 are mutually connected to one another by a bus 508.

The processor 500 controls the entire operation of the computer 5 by executing various programs including the program of an OS (Operating System). Also, the processor 500 which executes the programs may function as the control section 200 of the Web system 2 or the control section 300 of the calculation device 3. Moreover, for example, the processor 500 may include one or a plurality of CPUs (Central Processing Units). Furthermore, the processor 500 may include a DSP (Digital Signal Processor) or a GPU (Graphics Processing Unit).

The main storage device 501 includes a ROM (Read Only Memory) and a RAM (Random Access Memory), and is used to store all or part of the programs that are executed by the processor 500, provide a workspace that is used when the processor 500 executes a program, or the like.

The auxiliary storage device 502 is an HDD (Hard Disk Drive), an SSD (Solid State Drive), or the like, and used to store programs that are used by the processor 500, data that is referred to when the processor 500 executes a program, data that is created during program execution, etc.

The input device 503 may include an input device for inputting characters, such as a keyboard, and a pointing device, such as a mouse. The display device 504 may include a dot-matrix display device, such as a liquid crystal display, and lamps for indicating the state of the computer 5, such as LED (Light Emitting Diode) lamps. In a case where the computer 5 is equipped with a touch panel display, the input device 503 includes a position detector arranged overlapping with the display surface of the display device 504.

The communication device 505 connects the computer 5 to a communication network such as the Internet 4, and communicates with an external device through the communication network. This communication device 505 of the computer 5 may function as the communication section 204 of the Web system 2 or the communication section 304 of the calculation device 3.

The medium reading device 506 performs the reading-out of information recorded in a portable recording medium 510, and the writing (recording) of information on the portable recording medium 510. For example, the portable recording medium 510 may be an optical disk such as a CD-ROM (Compact Disc-Read Only Memory), a CD-R (Compact Disc-Recordable), a CD-RW (Compact Disc-Rewritable), a DVD-ROM (Digital Versatile Disc-Read Only Memory), a DVD-R (Digital Versatile Disc-Recordable), a DVD-RW (Digital Versatile Disc-Rewritable), a DVD-RAM (Digital Versatile Disc-Random Access Memory), a Blu-ray Disc (registered trademark), and a BD-R (Blu-ray Disc-Recordable), a magnetic disc such as a floppy disk (registered trademark), or another read-only or readable recording medium. Note that plural types of medium reading devices 506 corresponding to the types of these portable recording media 510 may be included in the computer 5. For example, the computer 5 may include a device compatible with an optical disk and a device compatible with a card type memory as the medium reading device 506.

The input/output interface 507 may be a hardware interface for connecting an external device such as a peripheral device to the computer 5. For example, the input/output interfaces 507 includes a USB (Universal Serial Bus) standard port and an HDMI (High-Definition Multimedia Interface: registered trademark) standard port, etc. This input/output interface 507 may be used for, for example, connecting an external storage device 511 such as an external HDD (Hard Disk Drive) and a memory device having a USB port to the computer 5.

Note that the structures of computers which are available as a server of the Web system 2 or the calculation device 3 are not limited to that of the computer 5 described above with reference to FIG. 2. For example, computers available as the calculation device 3 may be those without the medium reading device 506.

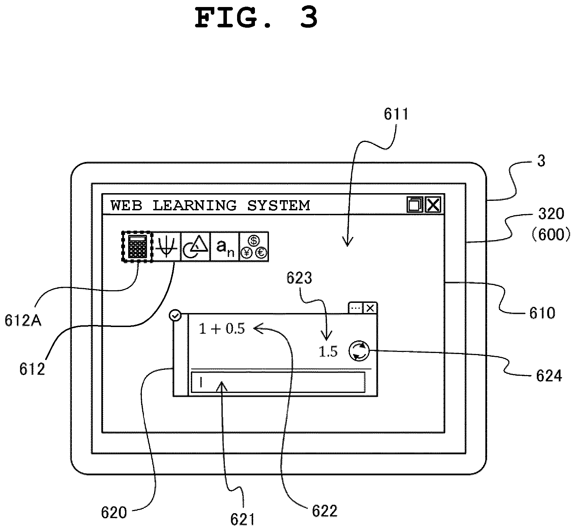

FIG. 3 shows an example of a display screen which is displayed on a touch panel display 320 when a tablet computer is used as the calculation device 3.

On the touch panel display 320 of the calculation device 3 shown in FIG. 3, a screen 600 is displayed which includes a web browser 610 by which content provided by the Web system 2 is available. The web browser 610 includes a workspace 611 which is occasionally called "paper", "notebook", etc. In the workspace 611, a menu bar 612 whose position can be freely changed within the workspace 611 is displayed. The menu bar 612 is occasionally called "tag menu" or the like. In the menu bar 612, a plurality of icons is displayed which indicates each of plural content that can be provided by the Web system 2. Note that the number of the icons in the menu bar 612 is not limited to five shown in FIG. 3.

Among the five icons in the menu bar 612 shown in FIG. 3, the leftmost icon 612A is an icon for providing (selecting) mathematical calculator content. When the user of the calculation device 3 taps the field where the leftmost icon 612A has been displayed on the touch panel display 320, a mathematical calculator object 620 which is occasionally called "tag", "electronic tag", or the like is displayed in the workspace 611.

The mathematical calculator object 620 includes an input area 621 where a mathematical equation is inputted, a mathematical equation display area 622 where an inputted mathematical equation is displayed, and a solution display area 623 where the solution of an inputted mathematical equation is displayed. In addition, in the case of the calculation device 3 according to the present embodiment, when a solution displayed on the solution display area 623 can be displayed in other display styles, a conversion icon 624 indicating that the solution can be displayed in these other display styles is displayed in the mathematical calculator object 620.

In the input area 621 of the mathematical calculator object 620, characters and the like which are used as numbers, arithmetic symbols, functions, and variables can be inputted by, for example, operations on keys not shown in the drawings or handwriting recognition. Numbers or arithmetic symbols inputted in the input area 621 are displayed in the mathematical equation display area 622 in the order of the input. When a mathematical equation is inputted and a symbol or the like such as "=" associated with calculation execution is inputted in the input area 621, the solution of the inputted mathematical equation is displayed in the solution display area 623. In the example shown in FIG. 3, "1 + 0.5" is an inputted mathematical equation, and "1.5" is the solution thereof in the solution display area 623. In the case of the calculation device 3 of the present embodiment, this solution displayed using the decimal "1.5" can be displayed in other display styles, such as the fraction "3/2" or the mixed fraction "1 and 1/2". For this reason, the conversion icon 624 is displayed to the right of the solution display area 623 in the mathematical calculator object 620 shown in FIG. 3. By the conversion icon 624 being displayed, the user of the calculation device 3 can easily grasp that a solution displayed in the solution display area 623 can be displayed (converted) in different display styles. Also, by performing a predetermined operation on the conversion icon 624, the user of the calculation device 3 can easily grasp to which display style the current display style of the solution can be switched.

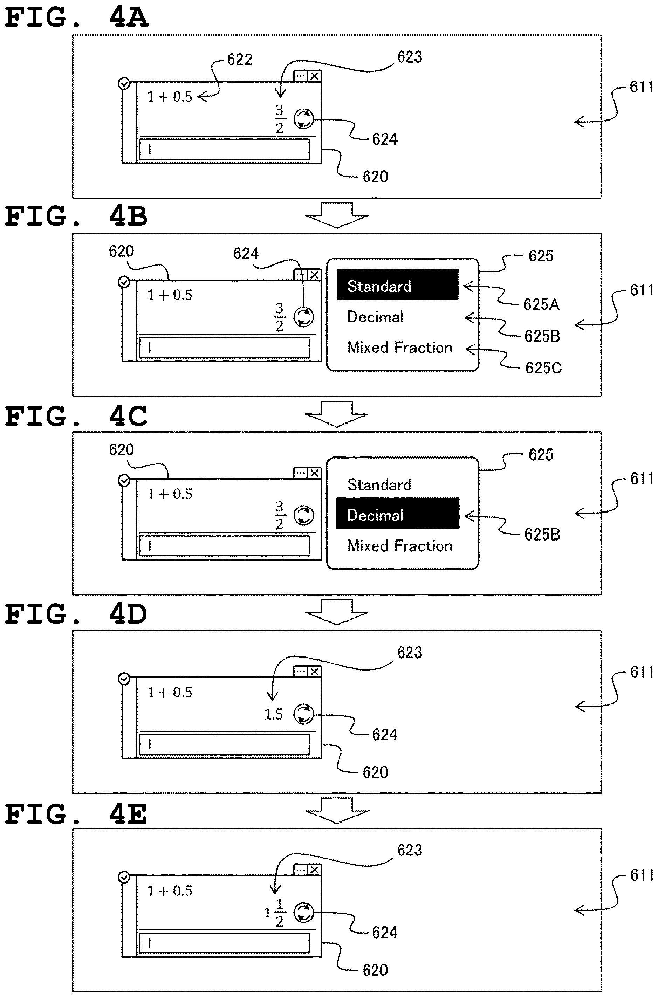

In FIG. 4A, as another example of the display style of the solution when the mathematical equation "1 + 0.5" is inputted in the mathematical calculator object 620 and calculated, an example is shown in which a standard setting style is the display style of the solution. For example, this standard setting style is a display style where a solution is represented by fewer mathematical elements or a solution is represented in a style used in textbooks and the like. The "mathematical elements" herein may be integer values, mathematical constants (such as the circle ratio π or the base of the natural logarithm (Napier number) e), mathematical symbols (such as √), and the like which are used to represent solutions. In the standard setting style, the decimal "1.5" is expressed by "3/2". For this reason, "3/2" is displayed on the solution display area 623 of the mathematical calculator object 620 shown in FIG. 4A. In the case of the calculation device 3 according to the present embodiment, the solution of the equation "1 + 0.5" can also be displayed as "1.5" as described above with reference to FIG. 3. Accordingly, in the mathematical calculator object 620 shown in FIG. 4A, the conversion icon 624 is displayed.

When an operation to select the conversion icon 624 (such as an operation of tapping the touch panel display 320) is performed, a conversion list 625 is displayed in the workspace 611, as shown in FIG. 4B. On the conversion list 625, display styles in which a solution on the solution display area 623 can be displayed are displayed in list form. "Standard" in the conversion list 625 shown in FIG. 4B is an item 625A indicating a display style where a solution is represented in the standard setting style, "Decimal" is an item 625B indicating a display style where a solution is represented using a decimal, and "Mixed Fraction" is an item 625C indicating a display style where a solution is represented using a mixed fraction. In the mathematical calculator object 620 in FIG. 4B, since the solution in the solution display area 623 has been displayed in the standard setting style, the item 625A "Standard" in the conversion list 625 is displayed to be highlighted, which is different from the display of the other items 625B and 625C. As a result, the user of the calculation device 3 can easily grasp that the solution "3/2" displayed in the solution display area 623 of the mathematical calculator object 620 is a solution represented in the standard setting style and that the current display style can be switched (converted) to the display style where the solution is displayed as decimal or the display style where the solution is displayed using a mixed fraction.

For example, when the user performs an operation to select the item 625B "Decimal" on the displayed conversion list 625, the item 625A "Standard" is displayed not to be highlighted as shown in FIG. 4C, and the item 625B of "Decimal" is displayed to be highlighted. When the selection of the item 625B "Decimal" is determined, for example, the display of the solution in the solution display area 623 of the mathematical calculator object 620 is switched to "1.5" from "3/2", as shown in FIG. 4D. Note that, although the example where the display of the solution is switched and the conversion list 625 is hidden has been shown in FIG. 4D, the conversion list 625 may be kept being displayed.

In addition, although detailed descriptions are omitted, when the user selects the item 625C "Mixed Fraction" on the conversion list 625, the solution in the solution display area 623 of the mathematical calculator object 620 is switched to "1 and 1/2" which is a mixed fraction, as shown in FIG. 4E.

The display positions of the conversion icon 624 and the conversion list 625 should preferably be close to the solution display area 623 of the mathematical calculator object 620. However, these positions are not limited to specific positions. The display position of the conversion icon 624 may be controlled in accordance with the display position of the mathematical calculator object 620 in the workspace 611 (or more specifically, the display position of the solution display area 623). Also, the display position of the conversion list 625 is not limited to the position shown in FIG. 4B and FIG. 4C at which the conversion list 625 is close to the mathematical calculator object 620 but does not overlap with the mathematical calculator object 620. For example, the conversion list 625 may overlap with the mathematical calculator object 620 within a range where it does not overlap with the solution display area 623.

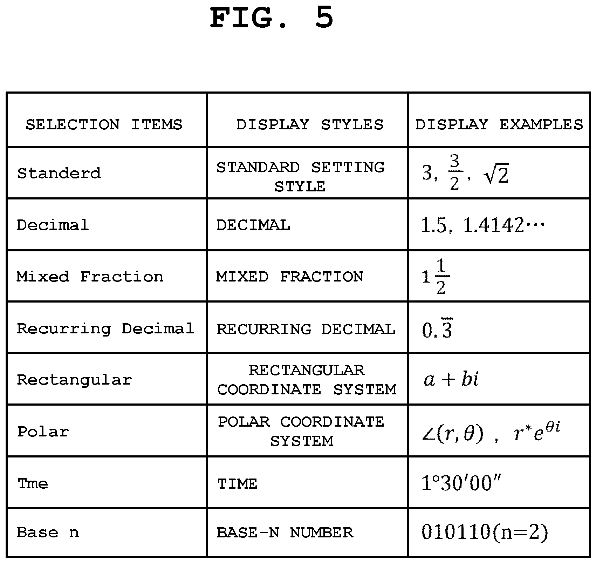

FIG. 5 shows an example of the relation of representations (selection items), display styles, and display examples on the conversion list 625.

"Standard" is a display style where a solution is represented in the standard setting style, and may be a display style where a solution is represented by fewer mathematical elements or a solution is represented in a style used in textbooks and the like, as described above. When "Standard" is selected, "3", "3/2", √2", or the like is displayed in the solution display area 623 of the mathematical calculator object 620 as a solution. Also, "Decimal" may be a display style where a solution is represented using a decimal. When "Decimal" is selected, "1.5", "1.4142...", or the like is displayed in the solution display area 623 of the mathematical calculator object 620 as a solution. Moreover, "Mixed Fraction" may be a display style where a solution is represented using a mixed fraction. When "Mixed Fraction" is selected, a mixed fraction such as "1 and 1/2" is displayed in the solution display area 623 of the mathematical calculator object 620 as a solution.

"Recurring Decimal" may be a display style where a solution is represented using a recurring decimal. When the solution of an inputted mathematical equation can be represented using a recurring decimal, the item "Recurring Decimal" is displayed on the conversion list 625. For example, when the solution of an inputted mathematical equation is "1/3 (= 0.33333...)", the item "Recurring Decimal" is displayed on the conversion list 625. This recurring decimal is not limited to a decimal where a single number is repeated, and may be a decimal where a sequence of two or more digits is repeated (such as 0.172517251725...).

"Rectangular" may be a display style where a solution is represented using a rectangular coordinate system. When the solution of an inputted mathematical equation can be expressed using a rectangular coordinate system (such as "a + bi" ("i" is an imaginary number)), the item "Rectangular" is displayed on the conversion list 625. Also, "Polar" may be a display style where a solution is represented using a polar coordinate system. When the solution of an inputted mathematical equation can be expressed using a polar coordinate system (such as L (r, θ) and r*e^{θi}), the item "Polar" is displayed on the conversion list 625.

"Time" may be a display style where a solution is represented using time. For example, 3/2 (hour) can be represented as 1 hour, 30 minutes and 00 seconds (1°30'00"), or 90 minutes. When the solution of an inputted mathematical equation can be expressed using time, "Time" is displayed on the conversion list 625. Also, "Base n" may be a display style where a solution is represented using a base-n number ("n" is a natural number greater than or equal to 2). For example, when the solution of an inputted mathematical equation can be displayed using a binary digit, the item "Base 2" is displayed on the conversion list 625.

Note that the display styles associated with the items described above with reference to FIG. 5 are only examples of display styles in which the solution of an inputted (specified) mathematical equation can be displayed. These display styles to which a current display style can be switched (converted) in the calculation device 3 may also include other display styles. In addition, some of these display styles associated with the above-described items may be omitted. Also, these display styles to which a current display style can be switched (converted) in the calculation device 3 may be set (specified) by the user of the calculation device 3 from among a plurality of display styles.

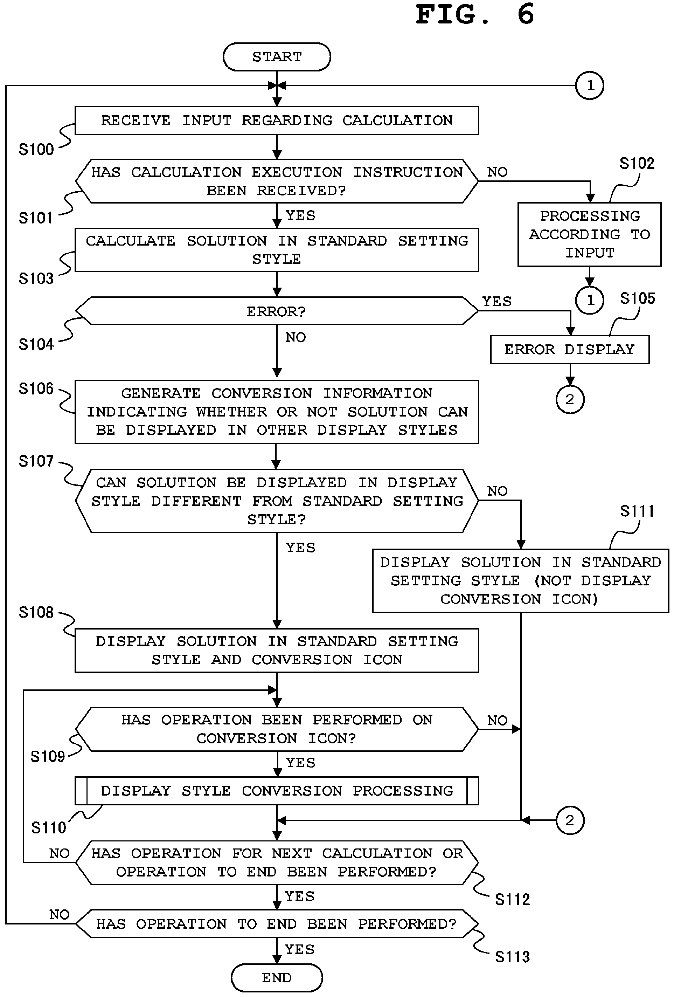

The control section 300 in the calculation device 3 of the present embodiment performs processing according to the flowchart shown in FIG. 6 independently or in combination with the storage section 301, the input section 302, the display section 303, the communication section 304, etc.

When an operation to display the mathematical calculator object 620 in the workspace 611 of the web browser 610 is performed by the user, the calculation device 3 displays the mathematical calculator object 620 so as to receive an input related to calculation (Step S100) . When an input is received, the calculation device 3 judges whether or not the received input is a calculation execution instruction (Step S101). For example, at Step S101, the calculation device 3 judges whether or not a mathematical symbol related to a calculation execution instruction such as "=" has been inputted. When the received input is not a calculation execution instruction (NO at Step S101), the calculation device 3 performs processing according to the input (Step S102), and returns to Step S100. For example, when a character or the like representing a numerical value, a trigonometric function, a mathematical symbol, a variable, or the like is inputted, the calculation device 3 displays the inputted numerical value or the like in the mathematical equation display area 622 of the mathematical calculator object 620 at Step S102.

When a calculation execution instruction is received (YES at Step S101), the calculation device 3 calculates the solution of an inputted mathematical equation in the standard setting style (Step S103). For example, at Step S103, the calculation device 3 executes a calculation script contained in a Web page displayed by the web browser 610. Then, after Step S103, the calculation device 3 judges whether or not a solution calculation result at Step S103 is an error (Step S104). For example, when the inputted mathematical equation has an error, or when the digit number of the solution exceeds a displayable digit number, the calculation device 3 judges that the solution calculation result is an error. When the solution calculation result is an error (YES at Step S104), the calculation device 3 displays an error message or the like in the solution display area 623 of the mathematical calculator object 620 (Step S105), and then performs judgment at Step S112. At Step S112, the calculation device 3 judges whether or not an operation to execute next calculation or an end operation has been performed.

When the solution calculation result at Step S103 is not an error (NO at Step S104), the calculation device 3 generates conversion information indicating whether or not the solution can be displayed in other display styles (Step S106). Examples of the conversion information generated at Step S106 are described later with reference to FIG. 8 and FIG. 9. This conversion information is generated by, for example, the calculation device 3 executing a script for conversion information generation contained in a Web page displayed by the web browser 610.

After Step S106, the calculation device 3 judges whether or not the solution can be displayed in a display style different from the standard setting style on the basis of the generated conversion information (Step S107). For example, at Step S107, the calculation device 3 judges whether or not a display style whose representation is different from that of the standard setting style is present among the display styles different from the standard setting style. For example, when the solution represented in the standard setting style is "3" and the solution in the display style that represents using a decimal is also "3", the calculation device 3 judges that the solution cannot be displayed in a different display style. When judged that the solution cannot be displayed in a different display style (NO at Step S107), the calculation device 3 displays the solution in the standard setting style in the solution display area 623 of the mathematical calculator object 620 (Step S111), and then makes a judgment at Step S112. Note that, as Step S111, the calculation device 3 does not display the conversion icon 624 in the mathematical calculator object 620, whereby the user of the calculation device 3 can easily grasp that the solution currently being displayed in the mathematical calculator object 620 cannot be converted to use a different representation based on a different display style.

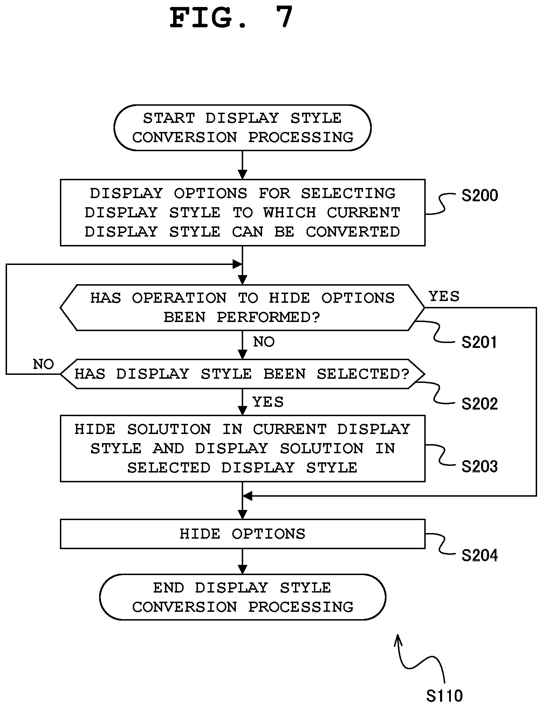

When the solution can be displayed in a different display style (YES at Step S107), the calculation device 3 displays the solution in the standard setting style in the solution display area 623 of the mathematical calculator object 620, and also displays the conversion icon 624 (Step S108). After Step S108, the calculation device 3 judges whether or not an operation has been performed on the conversion icon 624 (Step S109) . When an operation has been performed on the conversion icon 624 (YES at Step S109), the calculation device 3 performs display style conversion processing (Step S110), and then makes a judgment at Step S112. Conversely, when no operation has been performed on the conversion icon 624 (NO at Step S109), the calculation device 3 skips display style conversion processing at Step S110, and makes a judgment at Step S112. This display style conversion processing at Step S110 may be performed as the processing described above with reference to FIG. 4A to FIG. 4E. An example of this display style conversion processing is described later with reference to FIG. 7.

When an operation for next calculation or an end operation is performed (YES at Step S112), the calculation device 3 judges whether or not this operation is an end operation (Step S113). When this operation is not an end operation (NO at Step S113), that is, when an operation for next calculation is performed, the calculation device 3 returns to the processing at Step S100. Conversely, when an end operation is performed (YES at Step S113), the calculation device 3 performs, for example, processing for hiding the mathematical calculator object 620 currently being displayed in the workspace 611 of the web browser 610 and ends the processing.

For example, as the display style conversion processing at Step S110, the calculation device 3 performs processing according to the flowchart shown in FIG. 7. First, the calculation device 3 displays options for selecting a display style to which the current display style can be converted, on the basis of the conversion information generated at Step S106 (Step S200). Then, the calculation device 3 judges whether or not an operation to hide the options displayed at Step S200 has been performed (Step S201). In the present embodiment, at Step S200, the calculation device 3 displays the conversion list 625 described above with reference to FIG. 4B and FIG. 4C, in the workspace 611 of the web browser 610. In this case, at Step S201, the calculation device 3 judges whether or not an operation to hide the conversion list 625 has been performed. This operation to hide the conversion list 625 may be, for example, an operation to tap an area outside the area where the conversion list 625 is being displayed in the workspace 611 or an operation to push a button which is not shown in FIG. 4B and is used to hide the conversion list 625. Also, the conversion list 625 may be alternately displayed and hidden each time the conversion icon 624 is tapped.

When an operation to hide the options is performed (YES at Step S201), the calculation device 3 hides the options (conversion list 625) (Step S204), and ends the display style conversion processing. Conversely, when an operation to hide the options is not performed (NO at Step S201), the calculation device 3 judges whether or not an operation to select a display style has been performed (Step S202). When an operation to select a display style has not been performed (NO at Step S202), the calculation device 3 returns to the judgment at Step S201.

When an operation to select a display style has been performed (YES at Step S202), the calculation device 3 hides the solution in the current display style, and displays the solution in the selected display style (Step S203). After Step S203, the calculation device 3 hides the options (conversion list 625) (Step S204), and ends the display style conversion processing.

Note that the processing described above with reference to FIG.6 and FIG.7 is merely an example of processing of the calculation device 3 which executes mathematical calculator content. The processing details and sequential order of the processing related to the display of a solution calculated by the calculation device 3 which performs mathematical calculator content can be changed within the scope of the present disclosure. For example, the processing described above with reference to FIG. 6 and FIG. 7 may be performed by the calculation device 3 and the Web system 2 coordinating with each other. Also, the calculation device 3 may be configured such that the Web system 2 performs the processing at Step S103 to Step S106 and all or part of the display style conversion processing at Step S110. Moreover, a configuration may be adopted in which the calculation device 3 performs processing for calculating the solution of a mathematical equation for which the calculation load is light, and the Web system 2 performs processing for calculating the solution of a mathematical equation for which the calculation load is heavy.

FIG. 8 shows conversion information 311A generated when the mathematical equation "1 + 0.5" is inputted and calculated. This conversion information 311A is generated by the calculation device 3 or the Web system 2 at Step S106 of the flowchart shown in FIG. 6. In this conversion information 311A, information is included which indicates, for each item, whether or not the items shown in FIG. 5 can be displayed. More specifically, when an item can be displayed, a solution represented in a display style corresponding to this item is shown. Also, when the item cannot be displayed, "null" is shown. In the case of the conversion information 311A in FIG. 8, representations of a solution in corresponding display styles are shown for the four items "Standard", "Decimal", "Mixed Fraction", and "Time", and "null" is shown for the other items. When the calculation device 3 or the Web system 2 generates this conversion information 311A, the solution "3/2" in the standard setting style is displayed in the solution display area 623 of the mathematical calculator object 620, and the conversion icon 624 is also displayed in the mathematical calculator object 620. When the conversion icon 624 is operated, the conversion list 625 including the four items "Standard", "Decimal", "Mixed Fraction", and "Time" is displayed.

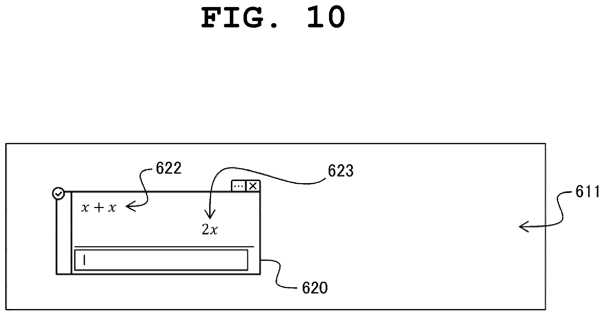

FIG. 9 shows conversion information 311B generated when the mathematical equation "x + x" is inputted and calculated. In the case of the conversion information 311B shown in FIG. 9, representations of a solution in corresponding display styles are shown for the two items "Standard" and "Decimal", and "null" is shown for the other items. However, here, the representations of the solution corresponding to "Standard" and "Decimal" are both "2x". In such a case, the calculation device 3 judges that the representation of the solution corresponding to "Decimal" is the same as the representation of the solution corresponding to "Standard" and no representation exists which can be displayed in a display style different from "Standard" (NO at Step S107). Accordingly, when the conversion information 311B is generated, only the solution "2x" in the standard setting style is displayed in the solution display area 623 of the mathematical calculator object 620 and the conversion icon 624 is not displayed, as shown in FIG. 10.

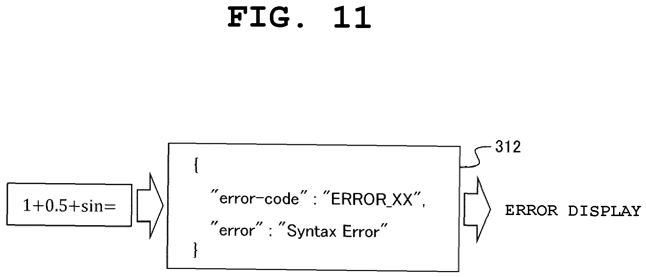

FIG. 11 shows error information 312 generated when the mathematical equation "1 + 0.5 + sin" is inputted and calculated. In this mathematical equation, the "x" portion of "sin(x)" has not been inputted. Accordingly, a syntax error occurs when solution calculation is executed at Step S103. When the syntax error occurs, the error information 312 is generated in the calculation device 3 or the Web system 2. Accordingly, on the basis of the error information 312, the calculation device 3 displays an error message or the like in the solution display area 623 of the mathematical calculator object 620 (Step S105).

As described above, when the solution of an inputted mathematical equation can be displayed using representations corresponding to two or more different display styles, the calculation device 3 of the present embodiment displays the solution in one display style and the conversion icon 624 indicating that the solution can be displayed in a different display style. Accordingly, the user of the calculation device 3 can easily grasp that the solution can be displayed in a different display style. Also, when a predetermined operation is performed on the conversion icon 624 displayed together with the solution, the calculation device 3 displays the conversion list 625 showing display styles in which the solution can be displayed. Accordingly, the user of the calculation device 3 can easily grasp to which display style the current display style of the displayed solution can be converted. That is, according to the calculation device 3, a technical task that is executed (performed) by the user, or in other words, an operation to convert the display style of a solution to the user's intended display style can be reliably supported by the interaction process between the user and the calculation device 3.

Also, when the representation of a solution in a first display style and the representation of the solution in a second display style are the same, the calculation device 3 judges that the two representations are the same, and the representation of the solution in the second display style is not different from the representation of the solution in the first display style. When the plural representations of the solution in the plural display styles are the same, the calculation device 3 does not display the conversion icon 624. As a result of this configuration, the user of the calculation device 3 does not have to perform an unnecessary operation of switching display styles when representations of a solution are the same.

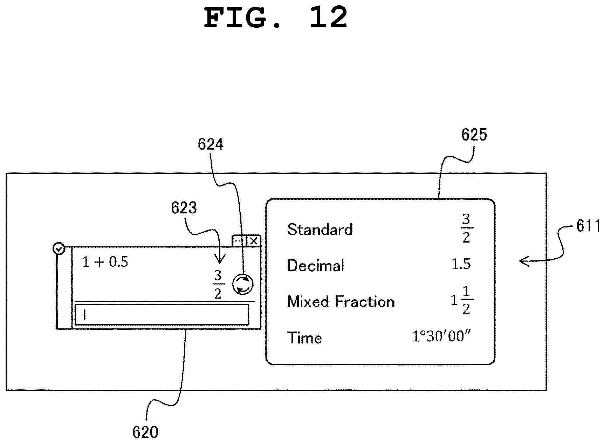

Note that, in addition to the items related to the above-described display styles, the conversion list 625 may include, for example, the display styles and the representations of the solution in the display styles, as shown in FIG. 12. The conversion list 625 shown in FIG. 12 can be easily generated by, for example, the switchable display styles and the representations of the solution being extracted from the conversion information 311A and 311B described above with reference to FIG. 8 and FIG. 9. By the conversion list 625 shown in FIG. 12 being displayed, the representations of the solution in the plurality of display styles can be compared to one another on the single screen, and the calculation learning can be efficiently performed.

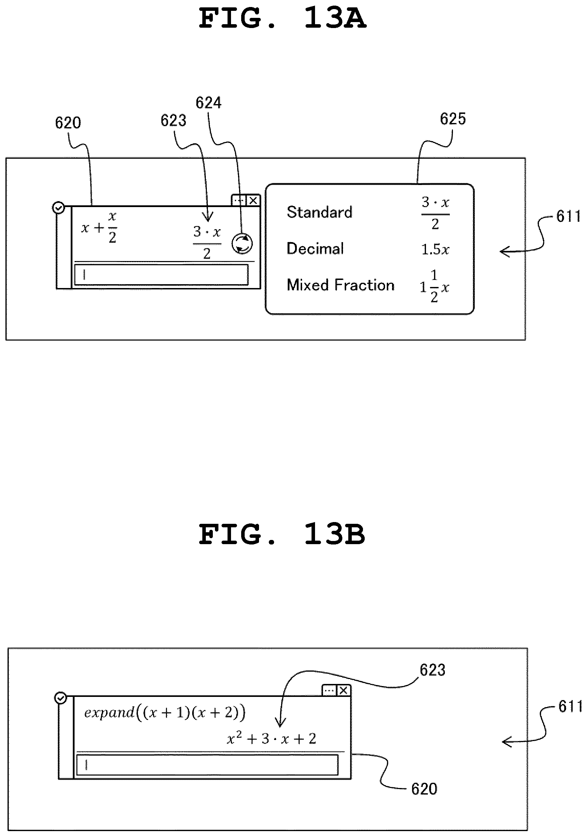

FIG. 13A shows representations of a solution of the mathematical equation "x + x/2" and an example of the conversion list 625. In this example, the representation of the solution in the standard setting style, the representation of the solution in the display style using a decimal, and the representation of the solution in the display style using a mixed fraction differ from one another. Accordingly, on the conversion list 625, the items and the representations of the solution corresponding to these three display styles are displayed.

In FIG. 13B, a mathematical equation has been inputted in which the expansion of "(x+1) (x+2)" is required to be found. Here, the expansion is "x² + 3 · x+2" in both the standard setting style and the display style using a decimal, and cannot be displayed in other display styles. Accordingly, in the solution display area 623 of the mathematical calculator object 620, "x² + 3 · x+2" which is the solution (expansion) is displayed, and the conversion icon 624 is not displayed.

Also, the mathematical calculator object 620 and the conversion list 625 described above with reference to FIG. 12, FIG. 13A, and FIG. 13B are merely display examples for the calculation device 3 according to the present embodiment, and the display of the mathematical calculator object 620 and the conversion list 625 for the calculation device 3 may be variously altered in accordance with an inputted mathematical equation. For example, the conversion list 625 may be configured such that only representations of a solution in display styles different from a representation displayed in the solution display area 623 are displayed and information indicating the display styles is not displayed.

The above-described embodiments are concrete examples for facilitating the understanding of the present disclosure, and the present disclosure is not limited to the above-described embodiments. The calculation device, the calculation system, and the program can be variously altered or modified within the scope of the claims.

For example, a configuration may be adopted in which, in calculation by the mathematical calculator object 620 of the calculation device 3, the initial setting of the display style of a solution can be selected from the standard setting style and the display style using a decimal. That is, a configuration may be adopted in which the user of the calculation device 3 can select a first solution to be displayed as a solution of a mathematical equation inputted in the calculation device 3 from a solution represented in the standard setting style and a solution represented in the display style using a decimal.

Also, the calculation system 1 shown in the above-described example may be, for example, part of a learning system integrated with a system that provides dictionary content. That is, the calculation device 3 may be a learning terminal (computer) that can be used for comprehensive learning using multiple types of content including content related to calculation and dictionary content.

Moreover, the calculation device 3 and the Web system 2 in the calculation system 1 shown in the above-described embodiment may be connected to each other by a communication network that is different from the Internet 4 and called a school LAN, a campus LAN, or the like.

## Claims

1. A calculation device (3) comprising a control section (500) which executes processing of:
controlling a display (320) to display a solution of a specified mathematical equation in a first display style among a plurality of predetermined display styles;
controlling the display (320) to display, when the solution of the mathematical equation is displayable in a different display style that differs from the first display style among the plurality of display styles, a conversion icon (624) indicating that the solution of the mathematical equation is convertible to be displayed in the different display style; and
controlling the display (320) to display information regarding the different display style or to display the solution of the mathematical equation in the different display style when a predetermined operation is performed on the conversion icon (624).

2. The calculation device (3) according to claim 1, wherein the control section (500) controls a position where the conversion icon (624) is displayed, on basis of a display position of the solution of the mathematical equation on the display (320).

3. The calculation device (3) according to claim 1, wherein the control section (500) controls to display, when a plurality of display styles to which the first display style is convertible exits, a selection list (625) from which a display style to which the first display style is converted is selectable from among the plurality of display styles, as the information regarding the different display style.

4. The calculation device (3) according to claim 1, wherein the control section (500) controls to display the information regarding the different display style and the solution of the mathematical equation represented in the different display style.

5. The calculation device (3) according to claim 1, wherein the control section (500) controls to display the conversion icon (624) when the solution of the mathematical equation represented in the different display style is different from the solution of the mathematical equation represented in the first display style.

6. The calculation device (3) according to claim 1, wherein the plurality of predetermined display styles includes two or more of a standard setting style that represents the solution by use of an integer, a mathematical constant, and a mathematical symbol, a display style that represents the solution by use of a decimal, a display style that represents the solution by use of a mixed fraction, a display style that represents the solution by use of a recurring decimal, a display style that represents the solution by use of a rectangular coordinate system, and a display style that represents the solution by use of a polar coordinate system.

7. The calculation device (3) according to claim 6, wherein the first display style is selected from the standard setting style and the display style that represents the solution by use of a decimal, and is switchable by a user of the calculation device (3).

8. A calculation system (1) comprising:
a calculation device (3) which displays a solution of a specified mathematical equation, and
a server (2) which calculates the solution of the specified mathematical equation,
wherein the server (2) includes a control section (200) which executes processing of (i) calculating the solution of the mathematical equation in a first display style among a plurality of predetermined display styles, (ii) generating information indicating a display style in which the solution of the mathematical equation is displayable among the plurality of predetermined display styles, and (iii) transmitting the solution of the mathematical equation and the information indicating the display style in which the solution of the mathematical equation is displayable, from a communication section (204) to the calculation device (3), and
wherein the calculation device (3) includes a control section (500) which executes processing of (i) controlling a display (320) to display the solution of the mathematical equation in the first display style, (ii) controlling the display (320) to display, when the solution of the mathematical equation is displayable in a different display style that differs from the first display style among the plurality of display styles, a conversion icon (624) indicating that the solution of the mathematical equation is convertible to be displayed in the different display style, and (iii) controlling the display (320) to display information regarding the different display style or to display the solution of the mathematical equation in the different display style when a predetermined operation is performed on the conversion icon (624).

9. A solution displaying method wherein a calculation device (3) executes processing of:
controlling a display (320) to display a solution of a specified mathematical equation in a first display style among a plurality of predetermined display styles;
controlling the display (320) to display, when the solution of the mathematical equation is displayable in a different display style that differs from the first display style among the plurality of display styles, a conversion icon (624) indicating that the solution of the mathematical equation is convertible to be displayed in the different display style; and
controlling the display (320) to display information regarding the different display style or to display the solution of the mathematical equation in the different display style when a predetermined operation is performed on the conversion icon (624).

10. A program that is executable by a calculation device (3) to perform processing of:
controlling a display (320) to display a solution of a specified mathematical equation in a first display style among a plurality of predetermined display styles;
controlling the display (320) to display, when the solution of the mathematical equation is displayable in a different display style that differs from the first display style among the plurality of display styles, a conversion icon (624) indicating that the solution of the mathematical equation is convertible to be displayed in the different display style; and
controlling the display (320) to display information regarding the different display style or to display the solution of the mathematical equation in the different display style when a predetermined operation is performed on the conversion icon (624).
